# EUROPEAN PATENT APPLICATION

(11) **EP 0 880 270 A2**
(43) Date of publication of application: **25.11.1998**
(21) Application number: 98304023.9
(22) Date of filing: 20.05.1998
(51) Int. Cl.: H04N 1/00

(54) **Digital copying method**

(30) Priority: 20.05.1997 KR 9719370
(71) Applicant: Samsung Electronics Co., Ltd., Suwon City, Kyungki-do (KR)
(72) Inventor: Kim, Kwang-seuk, Jangan-gu, Suwon, Kyonggi-do (KR)
(74) Representative: Ellis, Kate, Dr.

(57) **Abstract**

Disclosed are a digital copying method and a multifunctional machine having a scanning unit equipped a scanning motor for transporting the document and a printing unit equipped with an engine motor for transporting a printable medium. First, preferably, the printing unit is operated and a plurality of band memories for scanning and printing are initialized after receiving a signal from the printing unit indicating the preparation for printing is completed. Next, the document is scanned and a predetermined amount of scanned data is stored in one band memory from preferably a plurality of band memories. After the data is stored, the data is transmitted to the printing unit, and printing is performed whilst simultaneously the document is continuously scanned. Next, a predetermined amount of data is stored in another band memory out of a plurality of band memories. The steps are preferably repeatedly performed until scanning one page of the document is completed.

## Description

### Background of the Invention

The present invention relates to a digital copying method in a multi-functional machine and a multi-functional machine, having a scanning unit and a printing unit.

Nowadays, office automation devices such as printers, scanners, duplicators, facsimiles, etc. are widely used. To extend the utility of, these office automation devices improved devices having high efficiency have been developed. Accordingly, the manufacturing costs of these devices has increased which may impose an economic burden on users. One solution to this has been to integrate office automation devices, which have been used separately, into a single multi-functional device so reducing the economic burden on users.

Conventionally, in order to perform a copying operation in a known multi-functional machine, a page of a document is firstly scanned by a scanning unit, and data from the scanned page is stored in a memory. After that, the scanned data which is stored in the memory, is printed by driving a printing unit, thereby performing a document copy operation.

However, recently, as the resolution of the printing unit and the scanning units have been enhanced, the amount of data corresponding to one page of a document has increased. As a result, the capacity of the memory required for copying the document increases and thus the cost of the multi-functional machine rises.

### Summary of the Invention

According to the invention there is provided a digital copying method for use in a multi-functional machine having a scanning unit and a printing unit comprising the steps of scanning, storing and printing data from a document characterised by scanning a first band of a document so a pre-determined amount of data is scanned, storing the predetermined amount of data in one band memory from a selection of a plurality of said band memories, printing the scanned data, scanning a further band of the document so a further pre-determined amount data is scanned, storing the further predetermined amount in another band memory out of a plurality of the band memories, wherein the first band of the document is being printed as the second part of the document is being scanned.

In a further aspect there is provided an apparatus having a scanning unit and a printing unit comprising means for scanning, storing and printing data from a document,
characterised by means for scanning a first band of a document so a pre-determined amount of data is scanned, means for storing the predetermined amount of data in one band memory from a selection of a plurality of said band memories, means for scanning a further band of the document so a further pre-determined amount data is scanned, means for storing the further predetermined amount in another band memory out of a plurality of the band memories, wherein the first band of the document is being printed as the second part of the document is being scanned.

Preferably, scanning of the document is substantially continuous.

Preferably, data is starting to be scanned into one band memory as data is starting to be printed from another band memory.

Preferably, printing of data from one band memory is simultaneous with scanning of data into another band memory.

Preferably, performing said printing and storing operations is repeated until scanning one page of a document is completed.

Preferably, a count value is increased to count the number of times a band memory is used for scanning and/or printing.

Preferably, each band memory has an associated count value.

Preferably, a plurality of band memories for scanning and printing are initialised in response to a signal received from said printing unit indicating preparation for printing is completed.

Preferably, the running speed of a scanning motor in the scanning unit relative to the running speed of an engine motor associated with the printer unit is decided according to a predetermined mode before scanning said document.

Preferably, the predetermined mode is one of an enlarging copy mode, a reducing copy mode and a normal copy mode.

Preferably, the running speed of the scanning motor is varied.

Preferably, the speed of said scanning motor is decelerated so that the running speed of the engine motor can be faster than that of said scanning motor, when the predetermined mode is the enlarging copy mode; and the speed of the scanning motor is accelerated so that the running speed of the scanning motor can be faster than that of said engine motor, when the predetermined mode is the reducing copy mode.

Preferably, the number of band memories is two.

Preferably, there is provided a multi-functional machine and a method for such a machine having a scanning unit equipped with a scanning motor for transporting the document and a printing unit equipped with an engine motor for transporting a printable medium in which first, the printing unit is operated and a plurality of band memories for scanning and printing are initialized after receiving a signal from the printing unit, which indicates that the preparation for printing is completed. Preferably, after that, the document is scanned and a predetermined amount of scanned data is stored in one band memory out of a plurality of band memories. After the data is stored, preferably, the data is transmitted to the printing unit, and printing is performed whilst simultaneously the document is preferably continuously scanned. Next, a predetermined amount of data is stored in another band memory from a choice of a plurality of band memories.

Preferably a document is copied using a small amount of memory by driving a scanning unit and a printing unit simultaneously.

Preferably, enlarging/reducing copy of a document is provided by controlling a running speed of the scanning unit.

### Brief Description of the Drawings

The present invention will now be described with reference to the following drawings by way of example only.

FIG. 1 is a block diagram illustrating a multi-functional machine performing a digital copying operation according to the present invention.

FIG. 2A is a view illustrating the structure of a virtual band memory for a document when scanning one page of document according to the present invention.

FIG. 2B illustrates two band memories used for copying a document according to the present invention.

FIG. 3 is a flowchart illustrating a digital copying method in a multi-functional machine according to the present invention.

FIG. 4A is a flowchart illustrating a process of performing a scanning interrupt which conducts a direct memory access (DMA) interrupt for a digital copy according to the present invention.

FIG. 4B is a flowchart illustrating a process of performing a printing interrupt which conducts a DMA interrupt for a digital copy according to the present invention.

### Detailed Description of the Preferred Embodiments

In one embodiment of the present invention, a laser engine of electrophotographic type is used in the printing unit of a multi-functional machine. Alternatively, it is possible to use other printing methods such as ink-jet printing in the printing unit.

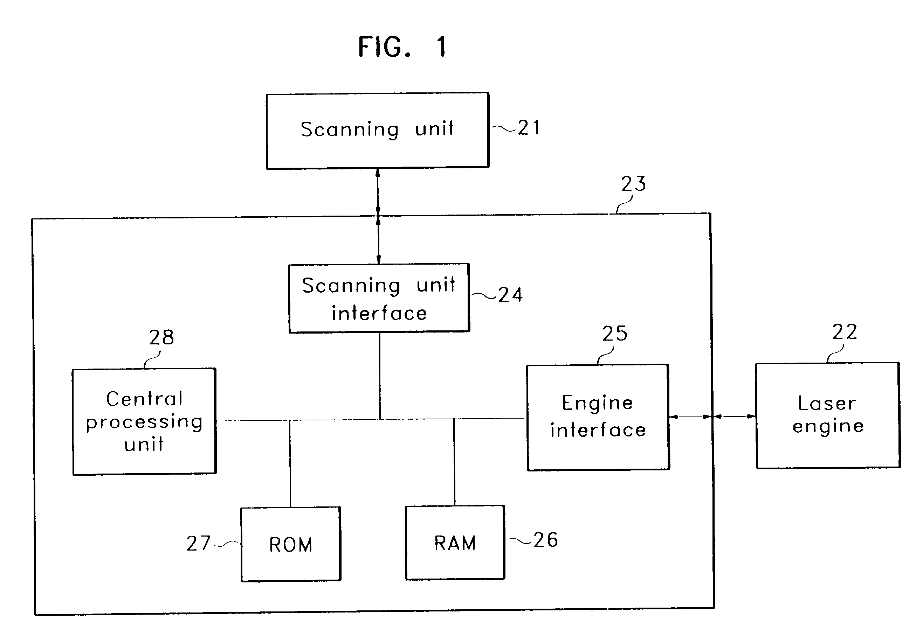

FIG. 1 is a block diagram illustrating the multi-functional machine performing a digital copying operation according to the present invention. As shown in the drawing, the multi-functional machine includes a scanning unit 21 for scanning data of a document a laser engine 22 for printing the scanned data and a controller unit 23 for receiving the scanned data and transmitting the data for printing to the laser engine 22.

Here, controller unit 23 includes a scanning unit interface 24 for receiving data which is scanned by the scanning unit 21 and a RAM 26 for storing the scanned data. The controller 23 also includes an engine interface 25 for transmitting the scanned data which is stored in the RAM to the laser engine 22, a ROM 27 for storing information about the control of each compartment and a central processing unit 28 for controlling each compartment by a control program stored in the ROM 27. As will be illustrated later, the control program for the digital copying method of the present invention is stored in the ROM 27 and the digital copying operation of the present invention is performed by the central processing unit 28.

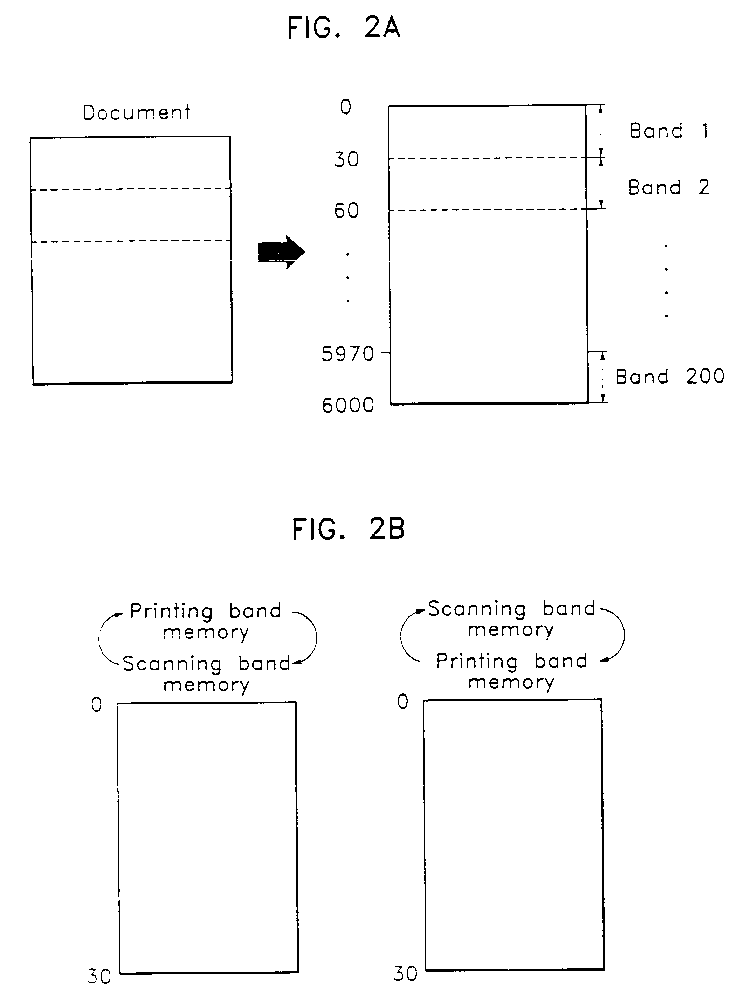

FIG. 2A illustrates a virtual band memory for a document and FIG. 2B illustrates two band memories used for copying a document according to the present invention.

In describing the preferred embodiment of the present invention, it is assumed, as an example only, that the longitudinal size of the document is ten (10) inches and one band memory stores 30 lines. In addition, for the purposes of the example only it is assumed that the document is scanned using a scanning unit of 600 DPI (dots per inch or per 2.5cm). In this case, since 600 dot lines are scanned per 1 inch (2.5cm) in the longitudinal direction, it is necessary to have a storage space for 6,000 (600 x 10) lines. Moreover, since one memory band can store 30 lines, 200 band memories are required.

In a multi-functional machine which uses the conventional document copying method, a space for storing 200 band memories is required.

In the present invention, as shown in FIG. 2B, two band memories are used. The first band memory stores data from the document corresponding to the scanned amount of one band memory. After storing of the data is completed, the stored data is transmitted to the laser engine 22, thereby performing the printing operation. Simultaneously, the second band memory scans data from the document corresponding to the size of the next band memory and then stores the scanned data.

In other words, each of the two band memories are used in turns as a scanning memory or a printing memory for data amounts in units of bands. Accordingly, since the data which is scanned by the scanning unit 22 is transmitted to the laser engine 22 in units of bands, the band is a basic unit for managing the data for scanning and printing.

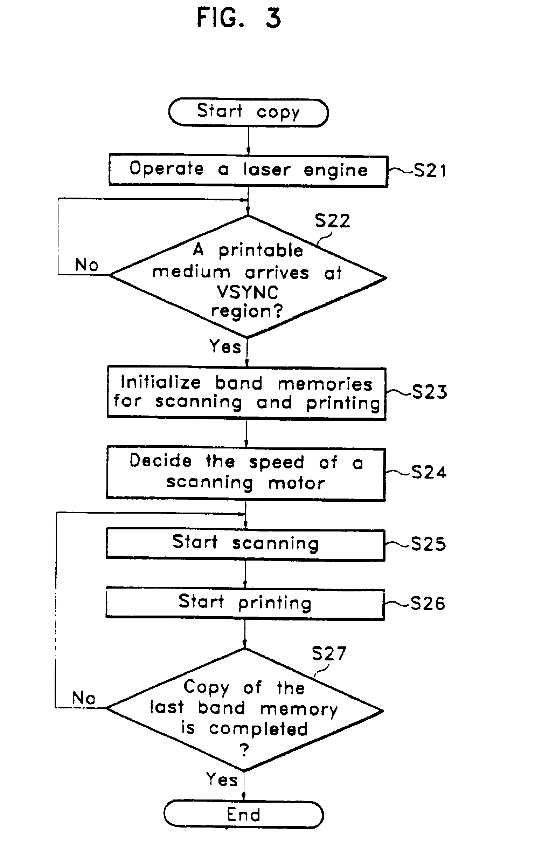

FIG. 3 is a flowchart illustrating the digital copying method in the multi-functional machine according to a preferred embodiment of the present invention.

As shown in the drawing, the method includes the steps of: operating the laser engine (step 21), initializing a plurality of band memories for scanning and printing, in response to receipt of the signal from the laser engine indicating that preparation for printing is completed, (steps 22 and 23). The method also includes the steps of deciding the speed of the scanning motor according to a predetermined mode (step 24) and scanning the document (step 25). The method includes printing the scanned data of the document (step 26) and determining whether copying of one page is completed (step 27).

In preferred embodiments of the present invention, a predetermined mode is an enlarging copy mode, a reducing copy mode or a normal copy mode. Moreover, the step of deciding the speed of the scanning motor may include the steps of decelerating the speed of the scanning motor so that the running speed of the engine motor (not illustrated) can be faster than that of the scanning motor (not illustrated), in which case the predetermined mode is an enlarging copy mode. The step of deciding the speed may include accelerating the speed of the scanning motor so that the running speed of the scanning motor can be faster than that of the engine motor, in which case the predetermined mode is the reducing copy mode.

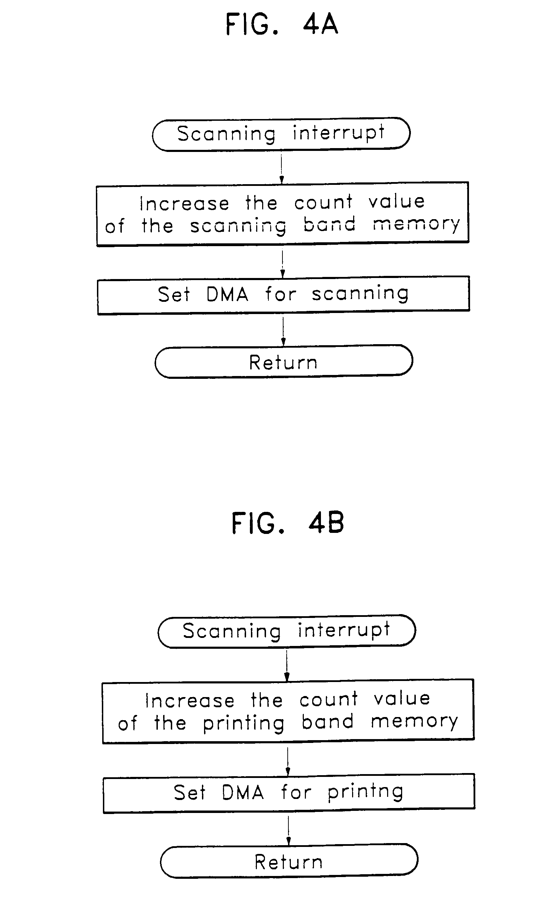

FIGs. 4A and 4B are processes for performing the scanning and printing interrupts, respectively, which conduct a direct memory access (DMA) interrupt for the digital copying operation according to the present invention. FIG. 4A indicates a process for performing the scanning interrupt. The process for performing the scanning interrupt includes the steps of increasing a count value of a band memory which is presently being scanned by one (1), setting the DMA for continuing the scanning operation and returning to the original state after completing the interrupt operation.

FIG. 4B indicates a process for performing the printing interrupt. The process for performing the printing interrupt includes the steps of increasing the value of a count value of a band memory which is presently being printed by one (1), setting the DMA for continuing the printing operation and returning to the original state after completing the interrupt operation.

At this time, the DMA is the use of special hardware for the direct transfer of data to or from memory to minimize the interruptions caused by program-controlled data transfers. In other words, data can be transferred between a peripheral memory and a main memory without using the CPU. It is possible to reduce the processing amount required of the CPU and so enhance the function of the computer by processing other data when inputting or outputting data to or from the memories.

The operation of the digital copying method in the multi-functional machine of the present invention will be explained as follows.

First, by operating the laser engine 22 for printing, the printable medium is picked up (step 21). It is determined whether the laser engine 22 is prepared for printing (step 22). In other words, when the printable medium arrives at a vertical synchronization (VSYNC) region adjacent the laser engine 22, a signal indicating that the preparation for printing is completed is transmitted to the controller 23. After that, the controller 23 determines the completion of the preparation.

When the laser engine 22 completes the preparation for printing, a plurality of band memories for scanning and printing are initialized (step 23).

After initializing the band memories, the speed of the scanning motor is decided according to a predetermined mode and the document starts to be scanned (steps 24 and 25). In the preferred embodiment, since the running speed when transporting the document is always constant from the VSYNC region to the top margin, the scanning start position is calculated accordingly, and thereby the scanning motor is operated and the scanning operation starts.

Moreover, in the preferred embodiment of the present invention, by fixing the scanning rate and the speed of the laser engine and varying the speed of the scanning motor, enlarging or reducing of copy can be performed.

In other words, when the speed of the scanning motor is delayed, since the speed of the laser engine is faster than the scanning speed, enlarging can be performed. On the contrary, when the speed of the scanning motor is increased, since the speed of supplying the document is faster than the supply of the printable medium, reducing can be performed.

Next, printing of the scanned data of the document is performed (step 26). In the preferred embodiment of the present invention, when performing the scanning and printing operations, data is processed in units of bands using the DMA method. At this time, by generating the interrupt, the scanning and printing interrupts are performed according to the DMA interrupt shown in FIGs. 4A and 4B. In other words, by increasing the count value of the band memory, data which is presently being processed is counted. Accordingly, it is possible to recognise the position of the band memory which is presently being scanned. Moreover, it is also possible to recognise the position of the band memory which is presently being printed.

During scanning and printing the document, it is determined whether the copy operation for a whole page is completed (step 27). In the example described it is presumed that the scanning operation regarding one whole page is completed when the count value or number of the band memory is 200.

As described above, by driving the scanning unit and laser printing unit simultaneously, the document is copied using a small amount of memory, thereby performing the enlarging or reducing copy. Also, by driving the scanning unit and printing unit at comparatively different speeds it is possible to enlarge and reduce.

In the application band means a predetermined amount of a document and/or an amount of memory, it is not to be limited by the shape of the bands illustrated in the figures.

## Claims

1. A digital copying method for use in a multifunctional machine having a scanning unit and a printing unit comprising the steps of:
scanning, storing and printing data from a document;
characterised by:
scanning a first band of a document so a pre-determined amount of data is scanned;
storing the predetermined amount of data in one band memory from a selection of a plurality of said band memories;
printing the scanned data;
scanning a further band of the document so a further pre-determined amount data is scanned;
storing the further predetermined amount in another band memory out of a plurality of the band memories;
wherein the first band of the document is being printed as the second part of the document is being scanned.

2. An apparatus having a scanning unit and a printing unit comprising:
means for scanning, storing and printing data from a document;
characterised by:
means for scanning a first band of a document so a pre-determined amount of data is scanned;
means for storing the predetermined amount of data in one band memory from a selection of a plurality of said band memories;
means for scanning a further band of the document so a further pre-determined amount data is scanned;
means for storing the further predetermined amount in another band memory out of a plurality of the band memories;
wherein the first band of the document is being printed as the second part of the document is being scanned.

3. A method or an apparatus according to claim 1 or 2, in which scanning of the document is substantially continous.

4. A method or apparatus according to claim 1, 2 or 3, in which data is starting to be scanned into one band memory as data is starting to be printed from another band memory.

5. A method or apparatus according to any preceding claim, in which the printing of data from one band memory is simultaneous with scanning of data into another band memory.

6. A method or apparatus according to any preceding claim comprising performing said printing and storing operations is repeated until scanning one page of a document is completed.

7. A method or apparatus according to any preceding claim, in which a count value is increased to count the number of times a band memory is used for scanning and/or printing.

8. A method or apparatus according to claim 7, in which each band memory has an associated count value.

9. A method or apparatus according to any preceding claim, in which a plurality of band memories for scanning and printing are initialised in response to a signal received from said printing unit indicating preparation for printing is completed.

10. A method or apparatus according to any preceding claim, in which the running speed of a scanning motor in the scanning unit relative to the running speed of an engine motor associated with the printer unit is decided according to a predetermined mode before scanning said document.

11. A method or apparatus according to claim 10, in which said predetermined mode is one of an enlarging copy mode, a reducing copy mode and a normal copy mode.

12. A method or apparatus according to claim 10 or 11, in which the running speed of the scanning motor is varied.

13. A method or apparatus according to claim 10, 11 or 12, in which the speed of said scanning motor is decelerated so that the running speed of the engine motor can be faster than that of said scanning motor, when the predetermined mode is the enlarging copy mode; and
the speed of the scanning motor is accelerated so that the running speed of the scanning motor can be faster than that of said engine motor, when the predetermined mode is the reducing copy mode.

14. A method or apparatus according to any preceding claim in which the number of band memories is two.

15. A method according as described herein with reference to and/or as illustrated with reference to the figures.
